Europäisches Patentamt

(19) European Patent Office

Office européen des brevets

(11) Publication number: **0 119 041**
**B1**

(12) **EUROPEAN PATENT SPECIFICATION**

(45) Date of publication of patent specification: **07.01.88**

(21) Application number: **84301381.4**

(22) Date of filing: **02.03.84**

(51) Int. Cl.⁴: **C 09 K 11/02, H 01 J 61/46**

(54) **Lamp envelope having a luminescent material on the interior surface thereof, method of applying said material and material to be applied.**

(30) Priority: **04.03.83 US 472399**

(43) Date of publication of application:
**19.09.84 Bulletin 84/38**

(45) Publication of the grant of the patent:
**07.01.88 Bulletin 88/01**

(84) Designated Contracting States:
**BE DE FR GB NL**

(56) References cited:
**FR-A- 870 816**
**FR-A-1 036 192**
**GB-A- 544 763**
**US-A-4 121 132**

**PATENTS ABSTRACTS OF JAPAN, vol. 6, no. 222(E-140)(1100), 6th November 1982**

(73) Proprietor: **GTE Products Corporation**
**100 West 10th Street**
**Wilmington, DE 19801 (US)**

(72) Inventor: **Ingraham, Robert C.**
**Wickwoods Shores Road**
**Merridith New Hampshire 03252 (US)**

(74) Representative: **Bubb, Antony John Allen et al**
**GEE & CO. Chancery House Chancery Lane**
**London WC2A 1QU (GB)**

0 119 041

# Description

This invention relates to luminescent materials, lamp bulbs coated with such materials and to methods for applying the luminescent materials to the bulbs. It has particular application to high intensity discharge (HID) lamps.

HID lamps employing arc tubes sealed in outer jackets frequently utilize a coating of a luminescent material on the interior surface of the jacket for light enhancement and/or color correction and/or to produce light having a particular color temperature.

In one known coating method, see Patents Abstracts of Japan, Vol. 6, No. 222(E-140) (1100), 6th November 1982 & JP—A—57 124 829, a calcium halophosphate phosphor activated with antimony and manganese is applied to the inner wall of a bulb for a fluorescent lamp by spraying it from an electrostatic powder coating nozzle. An aqueous boric acid solution is then sprayed into the bulb with an ultrasonic fog generator so as to cause it to adhere to the phosphor. After that, water adsorbed in the former phosphor is removed by heating the bulb. By this means boric acid adsorbed on the surface of the phosphor particles is dehydrated into boric anhydride which penetrates between the phosphor particles as well as between the phosphor and the glass surface to increase the adhesion of the phosphor.

It is occasionally necessary to produce light having a warm color temperature say 3000°K, to employ a relatively heavy layer of luminescent material.

By relatively heavy is meant a material weight greater than 0.007 grams per square centimeter $(g/cm^2)$. Generally luminescent materials for such lamps are applied by an electrostatic deposition process, exemplified by U.S. Patent No. 3,999,508. Adhesion problems occur, however, when material weights greater than 0.007 $g/cm^2$ are required.

It is, therefore, an object of the invention to improve adhesion of relatively heavy amounts of luminescent materials.

Yet another object of the invention is the provision of a process for applying relatively heavy amounts of luminescent material.

The invention is characterised by the provision of a composition of matter which comprises a luminescent material comprising 50 weight percent manganese activated magnesium fluorogermanate and 50 weight percent europium activated yttrium orthovanadate and boric acid.

The invention is further characterised by a method of providing a high intensity discharge lamp envelope with a luminescent material comprising the steps of: blending a composition of matter comprising 50 weight percent manganese activated magnesium fluorogermanate and 50 weight percent europium activated yttrium orthovanadate and boric acid; electrostatically depositing said composition of matter upon said envelope; heating said envelope and said composition to a temperature high enough to convert said boric acid to boron anhydride; and subsequently cooling said envelope. The employment of this composition of matter and this process allows coating weights greater than 0.007 $g/cm^2$.

The invention is thus further characterised by an envelope for a high intensity discharge lamp, said envelope having securely secured to its inside surface a luminescent composition of matter in an amount of about 0.0087 to 0.010 $g/cm^2$, said composition of matter comprising 50 weight percent manganese activated magnesium fluorogermanate and 50 weight percent europium activated yttrium orthovanadate and boron anhydride.

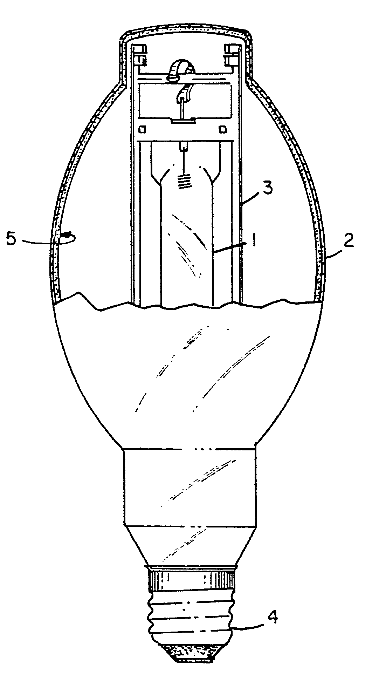

The invention is illustrated by way of example in the accompanying drawing, of which the single Figure illustrates a lamp, partially in section, utilizing the invention.

For a better understanding of the present invention, together with other and further objects, advantages and capabilities thereof, reference is made to the following disclosure and appended Claims taken in conjunction with the above-described drawing.

Referring now to the drawing with greater particularity, the high intensity discharge lamp shown comprises a mercury-containing arc tube 1 within a glass outer jacket 2. Arc tube 1 contains an inert starting gas and can also contain one or more metal halides. The arc tube is supported in arc tube mount 3 and has the usual electrical connections to a base 4. The inner wall of jacket 2 has a coating 5 adhered thereto. Coating 5 as applied is a composition of matter comprising a luminescent material and boric acid. The coating is granular and is applied by electrostatic deposition.

The boric acid $(H_3BO_3 \times H_2O)$ can comprise up to about 20 weight percent of the composition and preferably comprises about 5% by weight.

In a specific example, a luminescent material comprised of about 50 weight percent of manganese activated magnesium fluorogermanate and about 50 weight percent europium activated yttrium orthovanadate was substantially homogeneously blended with 5 weight percent boric acid.

This composition is electrostatically applied to the interior of a lamp envelope in an amount equal to about 0.0087 to 0.010 grams per square centimeter $(g/cm^2)$. This amounts to a total weight of about 2.3 to 2.8 grams for at BT37 envelope.

The envelope, and its deposited composition, is then heated to a temperature high enough to convert the boric acid to boron anhydride; e.g., at least 300°C; and then subsequently cooled, providing an envelope having a relatively heavy, well adhered coating.

It is believed that during the heating step, the boric acid begins to give up its water of hydration at about 175°C. With continued heating a soft borate type glass is formed which wets the luminescent material particles and the inner surface of the envelope. Additional heating com-

2

pletes the conversion to $B_2O_3$, boron anhydride. This compound is stable in a lamp and causes no changes in the maintenance characteristics of lamps in which it is employed.

Use of this material and this process allows luminescent material weights in the neighbourhood of four to five times as great as those typically employed.

## Claims

1. A composition of matter comprising: a luminescent material comprising 50 weight percent manganese activated magnesium fluorogermanate and 50 weight percent europium activated yttrium orthovanadate and boric acid.

2. The composition of Claim 1 wherein said boric acid comprises up to about 20 weight percent of said composition.

3. The composition of Claim 1 wherein said boric acid comprises about 5 weight percent of said composition.

4. The composition of Claim 1 wherein said composition is granular.

5. The composition of Claim 4 wherein said composition is substantially homogeneously blended.

6. A method of providing a high intensity discharge lamp envelope with a luminescent material comprising the steps of: blending a composition of matter comprising 50 weight percent manganese activated magnesium fluorogermanate and 50 weight percent europium activated yttrium orthovanadate and boric acid; electrostatically depositing said composition of matter upon said envelope; heating said envelope and said composition to a temperature high enough to convert said boric acid to boron anhydride; and subsequently cooling said envelope.

7. The method of Claim 6 wherein said temperature is at least 300°C.

8. An envelope for a high intensity discharge lamp, said envelope having securely secured to its inside surface a luminescent composition of matter in an amount of about 0.0087 to 0.010 g/cm², said composition of matter comprising 50 weight percent manganese activated magnesium fluorogermanate and 50 weight percent europium activated yttrium orthovanadate and boron anhydride.

9. The envelope of Claim 8 wherein said luminescent composition of matter is substantially evenly distributed on a given area of said envelope.

## Patentansprüche

1. Stoffzusammensetzung, bestehend aus einem lumineszierenden Material, das aus 50 Gewichtsprozenten mit Mangan aktiviertem Magnesiumfluorogermanat und 50 Gewichtsprozenten mit Europium aktiviertem Yttriumorthovanadat und Borsäure zusammengesetzt ist.

2. Stoffzusammensetzung nach Anspruch 1, dadurch gekennzeichnet, daß die Borsäure bis zu 20 Gewichtsprozente der Zusammensetzung ausmacht.

3. Stoffzusammensetzung nach Anspruch 1, dadurch gekennzeichnet, daß die Borsäure etwa 5 Gewichtsprozente der Zusammensetzung ausmacht.

4. Stoffzusammensetzung nach Anspruch 1, dadurch gekennzeichnet, daß sie in körniger Form vorliegt.

5. Stoffzusammensetzung nach Anspruch 4, dadurch gekennzeichnet, daß sie im wesentlichen homogen gemischt ist.

6. Verfahren zur Ausrüstung einer Hülle bzw. Röhre für eine Entladungslampe hoher Intensität mit einem lumineszierenden Material, gekennzeichnet durch die folgenden Schritte: Mischen einer Stoffzusammensetzung aus 50 Gewichtsprozenten mit Mangan aktiviertem Magnesiumfluorogermanat und 50 Gewichtsprozenten mit Europium aktiviertem Yttriumorthovanadat und Borsäure; elektrostatisches Aufbringen dieser Stoffzusammensetzung auf die Hülle bzw. Röhre; Aufheizen der Hülle bzw. Röhre und der Zusammensetzung auf eine Temperatur, die hoch genug ist, um die Borsäure in Boranhydrid umzuwandeln, und anschließendes Kühlen der Hülle bzw. Röhre.

7. Verfahren nach Anspruch 6, dadurch gekennzeichnet, daß die Temperatur zumindest 300°C beträgt.

8. Hülle bzw. Röhre für eine Entladungslampe hoher Intensität, die eine lumineszierende Stoffzusammensetzung in einer Menge von etwa 0,0087 bis 0,010 g/cm² an ihrer Innenfläche fest angebracht aufweist, wobei die Stoffzusammensetzung aus 50 Gewichtsprozenten mit Mangan aktiviertem Magnesiumfluorogermanat und 50 Gewichtsprozenten mit Europium aktiviertem Yttriumorthovanadat und Boranhydrid besteht.

9. Hülle bzw. Röhre nach Anspruch 8, dadurch gekennzeichnet, daß die lumineszierende Stoffzusammensetzung auf einem vorgegebenen Flächenbereich der Hülle bzw. Röhre im wesentlichen gleichmäßig verteilt ist.

## Revendications

1. Composition d'une matière comprenant un matériau luminescent incluant 50 % en poids de fluorogermanate de magnésium activé au manganèse et 50 % en poids d'orthovanadate d'yttrium activé à l'europium et d'acide borique.

2. Composition selon la revendication 1 caractérisée en ce qu'elle comprend jusqu'à 20 % en poids environ du dit acide borique.

3. Composition selon la revendication 1 caractérisée en ce qu'elle comprend environ 5 % en poids du dit acide borique.

4. Composition selon la revendication 1 caractérisée en ce qu'elle est granulaire.

5. Composition selon la revendication 4 caractérisée en ce qu'elle est mélangée de façon sensiblement homogène.

6. Procédé pour apporter un matériau luminescent à l'ampoule d'une lampe à décharge de haute intensité, caractérisé en ce qu'il comprend les étapes suivantes:

— mélanger d'une composition de matière comprenant 50 % en poids de fluorogermanate de magnésium activé au manganèse et 50 % en poids d'orthovanadate d'yttrium activé à l'europium et d'acide borique;

— déposer électrostatiquement la dite composition de matière sur la dite ampoule;

— chauffer la dite ampoule et la dite composition à une température suffisamment élevée pour que l'acide borique soit converti en anhydride de bore; et

— refroidir ensuite la dite ampoule.

7. Procédé selon la revendication 6 caractérisé en ce que la dite température est supérieure à 300°C.

8. Ampoule pour lampe à décharge à haute intensité sur la paroi interne de laquelle adhère fermement entre 0,0087 et 0,010 g/cm² environ d'une composition luminescente de matière comprenant 50 % en poids de fluorogermanate de magnésium activé au manganèse et 50 % en poids d'orthovanadate d'yttrium activé à l'europium et d'anhydride de bore.

9. Ampoule selon la revendication 8 caractérisée en ce que la dite composition luminescente de matière est distribuée de manière égale sur une surface déterminée de la dite ampoule.

1